(19) Europäisches Patentamt
European Patent Office
Office européen des brevets

(11) Numéro de publication: **0 016 264**
**B1**

(12) **FASCICULE DE BREVET EUROPEEN**

(45) Date de publication du fascicule du brevet: **16.06.82**

(21) Numéro de dépôt: **79200759.3**

(22) Date de dépôt: **13.12.79**

(51) Int. Cl.³: **C 22 B 60/02,**
C 01 G 43/00,
C 01 B 25/235,
C 01 B 25/46

(54) **Procédé d'extraction d'uranium d'acide phosphorique.**

(30) Priorité: **19.12.78 LU 80676**

(43) Date de publication de la demande:
**01.10.80 Bulletin 80/20**

(45) Mention de la délivrance du brevet:
**16.06.82 Bulletin 82/24**

(84) Etats contractants désignés:
**BE FR GB IT NL**

(56) Documents cités:
DE - A - 2 436 921
FR - A - 1 294 872
FR - A - 1 334 532
FR - A - 1 336 816
FR - A - 1 472 520
FR - A - 2 254 515
FR - A - 2 375 142
US - A - 3 835 214
US - H - 971 006

(73) Titulaire: **METALLURGIE HOBOKEN-OVERPELT Société anonyme dite:**
**8, rue Montagne du Parc**
**B-1000 Bruxelles (BE)**

(73) Titulaire: **SOCIETE DE PRAYON Société anonyme dite:**
**16, Grand-Rue**
**B-4940 Forêt-Trooz (BE)**

(72) Inventeur: **De Schepper, Achille**
**Berkenlaan 8**
**B-2451 Lichtaart (BE)**
Inventeur: **Van Peteghem, Antoine**
**Leemanslaan 21**
**B-2430 Olen (BE)**
Inventeur: **Belpaire, Georges**
**Cauwerburg 119**
**B-2690 Temse (BE)**

(74) Mandataire: **Saelemaekers, Juul et al,**
**METALLURGIE HOBOKEN-OVERPELT A.**
**Greinerstraat 14**
**B-2710 Hoboken (BE)**

**EP 0 016 264 B1**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition. (Art. 99(1) Convention sur le brevet européen).

Courier Press, Leamington Spa, England.

Procédé d'extraction d'uranium d'acide phosphorique

La présente invention est relative à un procédé d'extraction d'uranium d'acide phosphorique provenant de l'attaque à l'acide sulfurique de roches phosphatées uranifères comprenant les phases suivantes de traitement:

— la mise en contact de l'acide phosphorique avec une matière adsorbante,
— la séparation des matières solides de l'acide, et, comme phase finale,
— la mise en contact de l'acide avec un solvant organique en vue de l'extraction de l'uranium.

Un procédé d'extraction d'uranium de ce genre est connu par le document US—H—T 971 006.

Suivant ce procédé connu la mise en contact de l'acide avec une matière adsorbante, par exemple de la terre à foulon ou de la silice, enlève de l'acide des agents salissants. Ces agents sont des matières carbonées, qui se trouvent en suspension ou en solution dans l'acide phosphorique. Elles proviennent d'impuretés organiques présentes dans la roche phosphatée ou d'additifs organiques utilisés lors de l'élaboration de la roche phosphatée. Lorsqu'on soumet un acide phosphorique, dont on n'a pas enlevé ces agents salissants, à un processus d'extraction liquide-liquide pour en extraire l'uranium, il se forme entre la phase aqueuse et la phase organique une couche interfaciale, que les techniciens en la matière appellent "crud" et qui donne lieu à une séparation difficile des phases et à un encrassement rapide de l'appareillage d'extraction.

Dans un tel procédé d'extraction d'uranium, il importe en outre de désaturer l'acide phosphorique avant d'en extraire l'uranium. En effet, l'acide phosphorique provenant de l'attaque à l'acide sulfurique de roche phosphatée est sursaturé de composés inorganiques, notamment de $CaSO_4 . 2H_2O$ (gypse) qui normalement se précipitent très lentement. Or, quand on soumet un acide phosphorique, qui n'est pas désaturé, c'est-à-dire un acide dans lequel la précipitation de composés inorganiques n'a pas encore cessé, à une opération d'extraction liquide-liquide, l'installation d'extraction va être rapidement souillée de matières solides.

Suivant le procédé connu susdit on obtient à la fois l'enlèvement des agents salissants de l'acide et sa désaturation, avant l'extraction de l'uranium, en agitant vigoureusement l'acide avec de la terre à foulon ou avec de la silice et en laissant décanter ensuite les matières solides. Selon l'exemple VI, donné dans le dossier qui est à l'origine de la publication susdite, on obtient en utilisant de la terre à foulon après 121 heures de décantation un acide pratiquement stable, c'est-à-dire un acide dans lequel la précipitation de solides a pratiquement cessé. Ce procédé de l'art antérieur présente l'inconvénient d'exiger un traitement de longue durée de l'acide phosphorique, avant que ce dernier ne puisse être mis en contact avec un solvant organique en vue de l'extraction de l'uranium.

L'objectif principal de la présente invention est de fournir un procédé d'extraction d'uranium d'acide phosphorique du genre cidessus, qui évite l'inconvénient susmentionnné du procédé de l'art antérieur.

A cet effet, suivant l'invention, ou ajoute du gypse à l'acide et on maintient l'acide contenant ce gypse en mouvement pendant au moins 15 heures avant la mise en contact de l'acide avec la matière adsorbante, on traite l'acide par un floculant avant d'en séparer les matières solides, et on augmente la stabilité de l'acide, dont on a séparé les matières solides, soit en le chauffant soit en le diluant.

L'addition de gypse à l'acide et le maintien in mouvement de l'acide, contenant ce gypse, pendant au moins 15 heures ainsi que l'augmentation de la stabilité de l'acide, dont on a séparé les matières solides, par chauffage ou par dilution sont nécessaires pour que le contact ultérieur de l'acide avec le solvant organique ne provoque pas la formation d'un précipité gênant de composés inorganiques finement divisés.

Le traitement de l'acide par un floculant est nécessaire pour que le contact ultérieur de l'acide avec le solvant organique ne provoque pas la formation de "crud".

L'addition de floculant est également nécessaire pour assurer une séparation rapide entre les matières solides et l'acide, ce qui permet de limiter les frais d'équipement. Cette séparation peut être effectuée en tout cas par filtration ou centrifugation, mais, lorsqu'on a affaire avec un acide, dans lequel les solides décantent facilement, la séparation peut également être effectuée par décantation.

Dans une forme de réalisation avantageuse de l'invention, on effectue la mise en contact de l'acide avec la matière adsorbante sous agitation, avant le traitement de l'acide par le floculant. L'ensemble des matières solides est alors séparé de l'acide après le traitement de l'acide par le floculant.

Dans une autre forme de réalisation avantageuse de l'invention on effectue la mise en contact de l'acide avec la matière adsorbante en faisant passer l'acide, après en avoir séparé les matière solides, à travers un lit de matière adsorbante.

Cette forme de réalisation est particulièrement utile lorsqu'on utilise une matière adsorbante coûteuse telle que le charbon actif, qu'il y a lieu de régénérer en vue de sa ré-utilisation.

Il est à remarquer qu'il est déjà connu par le document FR—A1—2 375 142 d'enlever des

matières organiques et du fluor de l'acide phosphorique en vue de l'utilisation de l'acide purifié pour la fabrication de tripolyphosphates alcalins, de phosphate bicalcique ou d'engrais alimentaires. Dans ce procédé, on mélange à l'acide phosphorique à traiter une terre à foulon, on agite le mélange pendant un temps suffisant pour permettre, d'une part la réaction du fluor avec la terre à foulon et d'autre part, l'adsorption des matières organiques de l'acide sur la terre à foulon, et on sépare l'acide défloure clarifié de la terre à foulon utilisé soit par filtration soit par décantation. A la différence du procédé de la présente invention, ce procédé connu ne prévoit ni la désaturation de l'acide avant l'ajoute à l'acide de la matière adsorbante, ni le traitement de l'acide par un floculant. Or, ces deux mesures sont nécessaires pour produire un acide, dont l'uranium peut être extrait sans difficultés, c'est-à-dire sans qu'il y ait formation d'un précipité et de "crud".

Il est également à remarquer qu'il est déjà connu par le document FR—A—1 294 872 de soumettre de l'acide phosphorique chaud, provenant de l'attaque à l-acide sulfurique de roche phosphatée, à un traitement de désaturation et d'enlever en même temps des matières organiques de cet acide en vue de l'utilisation de l'acide purifié pour la fabrication d'ortho-, pyro- ou autres phosphates alcalins. Dans ce procédé, on ajoute du gypse à l'acide à traiter que l'on maintient en mouvement pendant deux heures tout en le refroidissant, et on ajoute de la terre à foulon à l'acide au cours de cette opération; la séparation des matières solides de l'acide traité se fait soit par décantation, soit par filtration. A la différence du procédé de la présente invention, ce procédé connu ne prévoit ni le maintien en mouvement de l'acide, contenant du gypse, pendant au moins 15 heures, ni le traitement de l'acide par un floculant. Or, ces deux mesures sont nécessaires pour produire un acide, dont l'uranium peut être extrait sans difficultés.

Par le document FR—A1—2 255 376 il est déjà connu d'enlever des agents salissants d'acide phosphorique obtenu par acidification d'un phosphate naturel non calciné, de concentrer ensuite par évaporation l'acide épuré et de récupérer finalement de l'acide détergent à partir de l'acide concentré par extraction liquide-liquide de l'acide.

Dans ce procédé connu on enlève les dits agents de l'acide phosphorique en traitant l'acide par de la silice activée et par un floculant et en laissant décanter le mélange obtenu, habituellement pendant environ 16 heures. A la différence du procédé de la présente invention, ce procédé connu ne prévoit ni l'ajoute de gypse à l'acide ni le maintien en mouvement de l'acide pendant au moins 15 heures avant la mise en contact de l'acide avec le matière adsorbante.

Par le document FR—A—1 366 816 il est déjà connu de clarifier et de décolorer de l'acide phosphorique obtenu par voie humide en vue de l'utilisation de l'acide épuré pour la fabrication de phosphates alcalins solides. Dans ce procédé connu on traite l'acide à la fois par un agent de décoloration et par du gypse, l'agent de décoloration étant constitué par un réducteur et/ou une matière absorbante, et/ou par un floculant. D'après les exemples de ce brevet, la présence d'un réducteur, d'un adsorbant, d'un floculant et de gypse est nécessaire pour obtenir une décoloration acceptable. D'après ces mêmes exemples, le traitement consite à agiter l'acide avec les additifs susmentionnés pendant environ 0,5 heure et à laisser ensuite décanter les solides. A la différence du procédé de la présente invention, ce procédé connu ne prévoit pas le maintien en mouvement de l'acide, contennant du gypse, pendant au moins 15 heures. En outre, ce procédé connu recommande avec instance de mettre en oeuvre un réducteur. Or, la mise en oeuvre d'un réducteur dans le procédé de la présente invention compliquerait sérieusement l'extraction ultérieure de l'uranium.

Par le document FR—A—1 334 532 il est connu de purifier l'acide phosphorique obtenu par voir humide en vue de son utilisation pour des fabrications ultérieures, telles que celles des phosphates alcalins ou d'engrais à hauts titres. Ce procédé connu comporte en combinaison le refroidissement et le maintien en mouvement pendant au moins deux heures de l'acide résultant de la filtration de la bouillie d'attaque, combinés éventuellement avec une ajoute de floculant et/ou d'une matière adsorbante et suivis d'une filtration. D'après les exemples de ce brevet, on maintient l'acide en mouvement pendant au maximum 6 heures. A la différence du procédé de la présente invention, ce procédé connu ne prévoit ni l'ajoute de gypse à l'acide à traiter ni le maintien en mouvement de l'acide pendant au moins environ 15 heures.

Par le document DE—A1—2 436 921 il est connu de purifier de l'acide phosphorique obtenu par voie humide en vue de l'utilisation de l'acide épuré pour la fabrication de phosphates ou de polyphosphates de qualité technique. Dans ce procédé on ajoute à l'acide impur des ions de sodium pour le défluorer ainsi que du gypse, après quoi l'on maintient l'acide en mouvement à environ 30°C pour le désaturer. Aprés 8 heures d'agitation des germes commencent à se former. Après la maturation de ces germes, qui peut s'étendre sur plusieurs heures, par exemple sur 24 heures, on ajoute un floculant à l'acide et on sépare les matières solides de l'acide. A la différence du procédé de la présente invention, ce procédé connu ne prévoit pas la mise en oeuvre d'une matière adsorbante et il ne permet donc pas de produire un acide, dont l'uranium peut être extrait sans qu'il y ait formation de "crud". En outre, ce procédé connu exige le traitement de l'acide impur par des ions de sodium, ce qui résulte en une sursaturation considérable de

l'acide en fluosilicate de sodium et conséquemment en une complication de sa désaturation.

Finalement il est connu par le document FR—A1—2 254 515 de désaturer et de défluorer de l'acide phosphorique obtenu par voie humide, en concentrant l'acide, en faisant réagir l'acide concentré avec un oxydant organique et avec de la silice pendant une période allant d'ordinaire de 25 à 40 heures et à une température allant de préférence de 65 à 95°C, et an refroidissant ensuite l'acide tout en le maintenant en mouvement pendant une période allant d'ordinaire de 25 à 50 heures. A la différence du procédé de la présente invention, ce procédé connu ne prévoit ni l'ajoute de gypse à l'acide, ni la mise en oeuvre d'un floculant; par contre, il exige une concentration préalable de l'acide et la mise en oeuvre de quantités substantielles d'oxydant.

La description ci-dessous d'un mode de réalisation préféré du procédé de l'invention, illustré par le schéma ci-joint, fera mieux comprendre l'invention et ses particularités.

On traite de l'acide phosphorique obtenu par filtration d'une bouillie résultant de l'attaque à l'acide sulfurique de roche phosphaté, cette bouillie étant constituée essentiellement d'un mélange d'acide phosphorique et de gypse.

L'acide à traiter contient normalement d'environ 28 à environ 32% en poids de $P_2O_5$ et sa température est normalement comprise entre 40 et 65°C.

On ajoute à l'acide filtré de la bouillie d'attaque en introduisant ainsi du gypse solide dans l'acide. La quantité de bouillie d'attaque ajoutée est de préférence telle que l'acide contient de 5 à 100 g de gypse solide par litre.

On refroidit maintenant l'acide jusqu'à une température d'environ 25 à 30°C.

On maintient cet acide refroidi en mouvement, par agitation, pendant 20 à 40 heures en désaturant ainsi l'acide.

On a joute ensuite à l'acide désaturé, que l'on continue à maintenir en mouvement de la terre à foulon. Terre à foulon ou terre décolorante est le nom collectif pour les matières argileuses, qui présentent la propriété d'extraire des colorants de graisses, huiles et cires. Ces matières argileuses sont constituées principalement de minéraux du groupe de la montmorillonite. Ce groupe comprend la bentonite, la nontronite, la beidellite et la hectorite. La montmorillonite présente au cas idéal la composition

$$Al_2(OH)_2[Si_4O_{10}]+nH_2O.$$

La quantité de terre à foulon à mettre en oeuvre et la durée de contact entre la terre à foulon et l'acide phosphorique dépendent évidemment de la nature et de l'origine de l'acide phosphorique à traiter et du pouvoir adsorbant de la terre à foulon utilisée. Ces paramètres peuvent être facilement déterminés par voie expérimentale.

On obtient normalement d'excellents résultats avec une quantité de terre à foulon allant d'environ 2 à environ 20 g par litre d'acide et avec une durée de contact allant d'environ 10 à environ 60 minutes. Il importe que la durée de contact entre la terre à foulon et l'acide ne dépasse pas 1,5 heure; sinon, les impuretés organiques qui se sont adsorbées à la terre à foulon commencent à se désorber.

En tant que terre à foulon, on peut utiliser le produit commercialisé sous la marque BENTONIT BW 100 par la firme SUD-CHEMIE A.G. d'Allemagne, ou les produits commercialisés sous le marques BENTONIT CLARSOL WY et BENTONIT CLARSOL FTP2 par la firme CECA de France. Ces produits sont des terres à foulon dites "non-activées".

Il est cependent plus avantageux d'utiliser une terre à foulon dite "activée", c'est-à-dire une terre à foulon qui a subie un traitement acide, telle que le produit commercialisé sous la marque TONSIL LFF 80 par la firme SUD-CHEMIE AG. En effet, dans ce cas-ci on doit mettre en oeuvre sensiblement moins de terre, ce qui facilite par après la séparation par filtration, entre la terre chargée d'agents salissants et l'acide traité. En outre, étant donné que la terre à foulon activée a déjà subi un traitement acide lors de son activation, le risque de contamination de l'acide phosphorique par la terre à foulon est pratiquement exclu.

Avant de séparer par filtration la terre à foulon chargée d'agents salissants et les substances cristallisées de l'acide phosphorique traitée, on ajoute à l'acide un floculant. On peut utiliser tout floculant traditionnel stable dans les acides minéraux concentrés. Des exemples de tels floculants sont les résines polymères à poids moléculaire élevé tels les polyacrylamides et les polyacrylonitriles. C'est ainsi qu'on peut utiliser en tant que floculant le produit commercialisé sous la marque SEDIPUR TF FEST par la firme BASF d'Allemagne, le produit commercialisé sous la marque SEPARAN NP-45 par la firme DOW CHEMICAL des Etats-Unis d'Amérique ou le produit commercialisé sous la marque MAGNAFLOC-155 par la firme Benelux Colloïd Inc.

La quantité de floculant à mettre en oeuvre peut être facilement déterminé par voie expérimentale.

On effectue la floculation en deux stades. Dans le premier stade, on ajoute le floculant à l'acide et on disperse le floculant dans l'acide sous une forte agitation de courte durée, cette durée étant comprise entre 20 et 60 secondes. Dans le second stade on maintient le floculant en dispersion dans l'acide sous une agitation mitigée pendant au moins 10 minutes et de préférence pendant environ 15 à environ 20 minutes. En agissant ainsi, on obtient, pour une quantité de floculant donnée, une vitesse de filtration optimale. Sous agitation mitigée on entend une agitation qui suffit pour maintenir les matières solides en suspension dans l'acide.

Après la floculation, on sépare les solides de

l'acide par filtration, par exemple sur un filtre à bande sous vide.

On chauffe le filtrat de façon à faire monter sa température de quelques degrés, par exemple de 5 à 10°C, on convertit l'uranium tétravalent présent dans le filtrat en uranium hexavalent par ajoute d'un oxydant, par exemple de perhydrol (solution aqueuse à 30% en volume $H_2O_2$) et on extrait l'uranium du filtrat chauffé et oxydé à l'aide d'un extractant organique connu en soi, constitué essentiellement d'une solution d'un acide dialkylphosphorique et d'un oxyde de trialkylphosphine dans un solvant organique inerte non miscible à l'eau.

Il est particulièrement avantageux d'effectuer l'extraction de l'uranium â une température allant de 30°C à 35°C, parce que la séparation des phases est difficile lorsqu'on opère en dessous de 30°C et que le coefficient de répartition de l'uranium entre la phase organique et la phase aqueuse est faible lorsqu'on opère au-dessus de 35°C.

Lorsqu'on utilise comme matière adsorbante du charbon actif, il est préférable de ne pas mettre en oeuvre ce charbon actif avant la floculation, mais de faire passer l'acide désaturé, après la floculation des solides y contenus et la filtration, à travers un lit de charbon actif.

Exemple 1

Cet exemple concerne la récupération de l'uranium de 2 m3 d'un acide phosphorique obtenu par attaque à l'acide phosphorique d'un minerai phosphaté de Khouribga (Maroc).

L'acide obtenu par filtration de la bouillie d'attaque contient 31% en poids de $P_2O_5$ et 1,6% de $CaSO_4 . 2H_2O$ (gypse) en solution. Cet acide se trouve à une température de 47°C et sa teneur en uranium est de 160 mg/l.

On ajoute à l'acide 200 litres de bouillie d'attaque en produisant ainsi de l'acide ayant 90 g/l de gypse en suspension.

On refroidit l'acide jusqu'à une température de 25°C et on agite lentement l'acide pendant 24 heures (vitesse de l'agitateur: 50 t.p.m.), on ajoute ensuite à l'acide 4 kg de TONSIL LFF 80 et on continue à agiter pendant 30 minutes. On ajoute finalement 20 litres d'une solution aqueuse de MAGNAFLOC-155 à 0,5 g de MAGNAFLOC par litre. On disperse ce floculant dans l'acide en agitant vigoureusement (vitesse de l'agitateur: 120 t.p.m.) pendant 30 secondes, après quoi on maintient l'acide en mouvement sous agitation mitigée (vitesse de l'agitateur: 45 t.p.m.) pendant 15 minutes.

On filtre sur un filtre à bande de 0,75 m2 sous un vide de $6 \times 10^4$ Pa et on obtient une vitesse de filtration de 2507 $l/h/m^2$ pour une alimentation de 43,5 $l/m^2$.

On chauffe le filtrat jusqu'à une température de 35°C et on y ajoute 480 cc de perhydrol pour convertir l'uranium tétravalent présent dans le filtrat en uranium hexavalent.

Finalement on sépare l'uranium du filtrat à l'aide d'un extractant organique constitué d'une solution de 0,5 M d'acide di-(2-éthylhexyl) phosphorique ($D_2EHPA$) et de 0,075 M d'oxyde de trioctylphosphine (TOPO) dans un dilant aliphatique inerte ("ESCAID-110" de la Société Esso Chemical Cy).

On effectue l'extraction en contre-courant dans une batterie de quatre mélangeurs-décanteurs. Le débit de la phase aqueuse, c.-à-d. de l'acide phosphorique uranifère (160 mg/l) est de 5 l/h, celui de la phase organique, c.-à-d. de l'extractant, qui se trouve à la même température que la phase aqueuse, est de 3,5 l/h. La séparation des phases est aisée; il n'y a ni formation de "crud", ni formation d'un précipité quelconque. On obtient de l'acide phosphorique appauvri en uranium (11 mg/l d'U) et une phase organique uranifère (213 mg/l d'U).

La récupération ultérieure de l'uranium de cette phase organique ne fait pas l'objet de la présente invention, mais les spécialistes savent qu'une voie intéressante pour effectuer cette récupération consiste à éluer l'uranium en des conditions réductrices de la phase organique à l'aide d'une solution aqueuse d'acide phosphorique en produisant ainsi une solution aqueuse à haute teneur en uranium (p.ex. 10 g/l d'U), à extraire l'uranium en des conditions oxydantes de cette solution aqueuse concentrée à l'aide d'un extractant constitué d'une solution $D_2EHPA$ et de TOPO dans un diluant aliphatique inerte, et à éluer l'uranium de cet extractant par une solution aqueuse de $(NH_4)_2CO_3$.

Exemple 2

On opère de la même façon que dans l'exemple 1, si ce n'est que l'on n'ajoute pas de gypse à l'acide obtenu par filtration de la bouillie d'attaque.

On constate que les mélangeurs-décanteurs utilisés pour l'extraction de l'uranium sont rapidement souillés de matières solides constituées essentiellement de gypse.

Exemple 3

On opère de la même façon que dans l'exemple 1, si ce n'est que l'on maintient l'acide, à laquelle on a ajouté du gypse, en mouvement pendant seulement 12 heures.

Comme dans l'exemple 2, on constate que les mélangeurs-décanteurs sont rapidement souillés de matières solides.

Exemple 4

On opère de la même façon que dans l'exemple 1, si ce n'est que l'on n'ajoute pas de floculant après le traitement de l'acide par la terre à foulon.

La vitesse de filtration tombe à 396 $l/h/m^2$. Le filtrat est trouble et contient des matières organiques en suspension; il y a formation de "crud" pendant l'extraction de l'uranium.

Exemple 5

On opère la même façon que dans l'exemple 1, si ce n'est qu l'on effectue l'extraction de l'uranium à 25°C.

On constate que les mélangeurs-décanteurs sont souillés de matières solides, plus particulièrement de gypse. On constate, en outre, que les phases se séparent difficilement dans les décanteurs; pour remédier à cet inconvenient on est obligé de réduire de 12% le débit des liquides dans les mélangeurs-décanteurs.

Exemple 7

Cet exemple met en évidence l'incidence des conditions de floculation sur la vitesse de filtration.

L'acide à filtrer est celui que l'on obtient dans l'exemple 1 après le traitement au TONSIL LFF 80. La quantité d'acide à filtrer est de 43,5 $l/m^2$. Le floculant utilisé est une solution aqueuse de MAGNAFLOC-155 à 0,5 g de MAGNAFLOC par litre.

On a effectué une série d'essais comparatifs de floculation et de filtration sur une cellule filtrante de 1,15 $dm^2$, au cours de laquelle on fait varier la quantité de floculant mis en oeuvre ainsi que la durée d'agitation mitigée (vitesse de l'agitateur: 80 t.p.m.) après dispersion du floculant dans l'acide, cette dispersion étant réalisée par une agitation vigoureuse (vitesse de l'agitateur: 240 t.p.m.) durant 30 secondes. Dans chaque essai, la filtration a démarré une demie heure après l'ajoute du floculant. L'épaisseur du gâteau de filtration est de 5 mm.

Les résultats de ces essais sont consignés dans le tableau ci-dessous.

Tableau

| quantité de floculant en litres par $m^3$ d'acide | durée d'agitation mitigée en minutes | vitesse de filtration en $l/h/m^2$ |
|---|---|---|
| 0 | 0 | 435 |
| 5 | 15 | 1087 |
| 10 | 15 | 2088 |
| 20 | 15 | 2372 |
| 20 | 15 | 2237 |
| 30 | 15 | 1044 |
| 40 | 15 | 874 |
| 20 | 0 | 363 |
| 20 | 5 | 749 |
| 20 | 30 | 2409 |
| 20 | 30 | 2270 |

De ce tableau, il ressort clairement qu'il n'importe pas seulement de mettre en oeuvre une quantité appropriée de floculant (20 l par $m^3$ d'acide dans le présent cas), mais également de prévoir une durée suffisante d'agitation mitigée (au moins 15 minutes dans le présent cas). Il va de soi que si on devait remplacer l'agitation mitigée par une agitation vigoureuse, on détruirait les flocs en réduisant ainsi sérieusement la vitesse de filtration.

De ce qui précède on aura compris que la présente invention offre un procédé unique pour la récupération d'uranium d'acide phosphorique. On aura également compris que ce procédé peut être facilement réalisé en continu.

Il doit être entendu que l'invention n'est nullement limitée aux exemples décrits ou au schéma annexé. Par exemple, l'ajoute de gypse à l'acide à désaturer peut se faire après le refroidissement de l'acide, tandis que la conversion de l'uranium tétravalent en uranium hexavalent dans l'acide épuré peut se faire avant le chauffage de ce dernier.

**Revendications de brevet**

1. Procédé d'extraction d'uranium d'acide phosphorique provenant de l'attaque à l'acide sulfurique de roches phosphatées uranifères comprenant les phases suivantes de traitement:

— la mise en contact de l'acide phosphorique avec une matière adsorbante,
— la séparation des matières solides de l'acide, et, comme phase finale,
— la mise en contact de l'acide avec un solvant organique en vue de l'extraction de l'uranium,

caractérisé en ce qu'on ajoute du gypse à l'acide et on maintient l'acide contenant ce gypse en mouvement pendant au moins 15 heures avant la mise contact de l'acide avec la matière adsorbante, on traite l'acide par un floculant avant d'en séparer les matières solides, et on augmente la stabilité de l'acide, dont on a séparé les matières solides, soit en le chauffant soit en le diluant.

2. Procédé selon la revendication 1, caractérisé en ce qu'on effectue la mise en contact de l'acide avec la matière adsorbante sous agitation, avant le traitement de l'acide par le floculant.

3. Procédé selon la revendication 2, caractérisé en ce qu'on utilise de la terre à foulon comme matière adsorbante.

4. Procédé selon la revendication 3, caractérisé en ce que la durée de contact entre la terre à foulon et l'acide est inférieure à 1,5 heure.

5. Procédé selon la revendication 1, caractérisé en ce qu'on effectue la mise en contact de l'acide avec la matière adsorbante en faisant passer l'acide, après en avoir séparé les matières solides, à travers u lit de matière adsorbante.

6. Procédé selon la revendication 5, caractérisé en ce qu'on utilise du charbon actif comme matière adsorbante.

7. Procédé selon l'une quelconque des revendications précédentes, caractérisé en ce qu'on ajoute 5 à 100 g de gypse par litre d'acide.

8. Procédé selon l'une quelconque des revendications précédentes, caractérisé en ce qu'on maintient l'acide en mouvement pendant 20 à 40 heures.

9. Procédé selon l'une quelconque des revendications précédentes, caractérisé en ce qu'on augmente la stabilité de l'acide, dont on a séparé les matières solides, en le portant à une température qui est de 5 à 10°C plus élevée que la température à laquelle l'acide a été maintenu en mouvement.

10. Procédé selon l'une quelconque des revendications précédentes, caractérisé en ce que le traitement de l'acide par un floculant consiste à disperser le floculant dans l'acide sous une forte agitation durant 20 à 60 secondes et à laisser ensuite agir le floculant pendant au moins 10 minutes sous une agitation mitigée.

11. Procédé selon l'une quelconque des revendications précédentes, caractérisé en ce qu'on utilise un solvant organique constitué essentiellement d'une solution d'un acide dialkylphosphorique et d'un oxyde de trialkylphosphine dans un solvant organique inerte non miscible à l'eau.

12. Procédé selon la revendication 9, caractérisé en ce qu'on effectue l'extraction de l'uranium à une température allant de 30 à 35°C.

**Patentansprüche**

1. Verfahren zur Extraktion von Uran aus Phosphorsäure, die aus der Einwirkung von Schwefelsäure auf phosphatisches, Uran enthaltendes Gestein herrührt, umfassend folgende Behandlungsphasen: die Phosphorsäure wird mit einem adsorbierenden Material in Berührung gebracht, die Feststoffe werden aus der Säure abgetrennt und als Endphase wird zur Extraktion des Urans die Säure mit einem organischen Lösungsmittel in Berührung gebracht,
dadurch gekennzeichnet, daß man der Säure Gips zufügt und die Gips enthaltende Säure während mindestens 15 Stunden in Bewegung hält bevor sie mit dem adsorbierenden Material in Berührung gebracht wird, daß man die Säure vor der Abscheidung der Feststoffe mit einem Flockungsmittel behandelt und daß man die Stabilität der von den Feststoffen getrennten Säure erhöht, indem man sie erwärmt oder verdünnt.

2. Verfahren nach Anspruch 1, dadurch gekennzeichnet, daß man die Säure mit dem adsorbierenden Material unter Rühren in Berührung bringt bevor die Behandlung der Säure mit dem Flockungsmittel durchgeführt wird.

3. Verfahren nach Anspruch 2, dadurch gekennzeichnet, daß man Fullererde als adsorbierendes Material verwendet.

4. Verfahren nach Anspruch 3, dadurch gekennzeichnet, daß die Dauer der Berührung zwischen der Fullererde und der Säure weniger als 1,5 Stunden beträgt.

5. Verfahren nach Anspruch 1, dadurch gekennzeichnet, daß man zum Inberührungbringen der Säure mit dem adsorbierenden Material die Säure nach Abtrennung der Feststoffe durch ein Bett aus adsorbierendem Material laufen läßt.

6. Verfahren nach Anspruch 5, dadurch gekennzeichnet, daß man Aktivkohle als adsorbierendes Material verwendet.

7. Verfahren nach einem der vorhergehenden Ansprüche, dadurch gekennzeichnet, daß man 5 bis 100 g Gips pro Liter Säure zufügt.

8. Verfahren nach einem der vorhergehenden Ansprüche, dadurch gekennzeichnet, daß man die Säure während 20 bis 40 Stunden in Bewegung hält.

9. Verfahren nach einem der vorhergehenden Ansprüche, dadurch gekennzeichnet, daß man die Stabilität der von den Feststoffen getrennten Säure erhöht, indem man sie auf eine Temperatur bringt, die 5 bis 10°C höher ist als die Temperatur, bei der die Säure in Bewegung gehalten wurde.

10. Verfahren nach einem der vorhergehenden Ansprüche, dadurch gekennzeichnet, daß zur Behandlung der Säure mit einem Flockungsmittel das Flokkungsmittel unter starkem, 20 bis 60 Sekunden dauerndem Rühren in der Säure dispergiert wird, wonach man das Flockungsmittel mindestens während 10 Minuten unter schwachem Rühren wirken läßt.

11. Verfahren nach einem der vorhergehenden Ansprüche, dadurch gekennzeichnet, daß man ein organisches Lösungsmittel verwendet, das hauptsächlich aus einer Lösung einer Dialkylphosphorsäure und einem Trialkylphophinoxid in einem inerten, mit Wasser nicht mischbaren organischen Lösungsmittel besteht.

12. Verfahren nach Anspruch 9, dadurch gekennzeichnet, daß man die Extraktion des Urans bei einer Temperatur von 30 bis 35°C durchführt.

**Claims**

1. A process for extracting uranium from

phosphoric acid that results from the leaching of uranium-bearing phosphate rocks by sulphuric acid, comprising the following treatment phases:

— contacting the phosphoric acid with an adsorbing agent,
— separating the solids from the acid, and as a final phase,
— contacting the acid with an organic solvent to extract the uranium,

characterized in that gypsum is added to the acid and the gypsum containing acid is stirred for at least 15 hours before contacting the acid with the adsorbing agent, the acid is treated by a flocculating agent before separating the solids from it and the stability of the acid, from which the solids were separated, is increased, either by heating or by diluting it.

2. A process according to claim 1, characterized in that the acid is contacted with the adsorbing agent under stirring, before the acid is treated by the flocculating agent.

3. A process according to claim 2, characterized in that fuller's earth is used as an adsorbing agent.

4. A process according to claim 3, characterized in that the duration of the contact between the fuller's earth and the acid is inferior to 1.5 hour.

5. A process according to claim 1, characterized in that the contact of the acid with the adsorbing agent is carried out by passing the acid, from which the solids were separated, through a bed of absorbing agent.

6. A process according to claim 5, characterized in that activated carbon is used as an adsorbing agent.

7. A process according to any of the preceding claims, characterized in that 5 to 100 g of gypsum is added per litre of acid.

8. A process according to any of the preceding claims, characterized in that the acid is stirred for 20 to 40 hours.

9. A process according to any of the preceding claims, characterized in that the stability of the acid, from which the solids were separated, is increased by bringing it to a temperature that is 5 to 10°C higher than the temperature at which the acid was stirred.

10. A process according to any of the preceding claims, characterized in that the treatment of the acid by a flocculating agent consists in dispersing the flocculating agent in the acid under a vigorous stirring for 20 to 60 seconds and in allowing afterwards the flocculating agent act for at least 10 minutes under a mitigated stirring.

11. A process according to any of the preceding claims, characterized in that an organic extractant is used, which is essentially composed of a solution of a dialkylphosphoric acid and a trialkylphosphine oxide in an inert organic solvent, that is not miscible with water.

12. A process according to claim 9, characterized in that the uranium extraction is carried out at a temperature from 30 to 35°C.

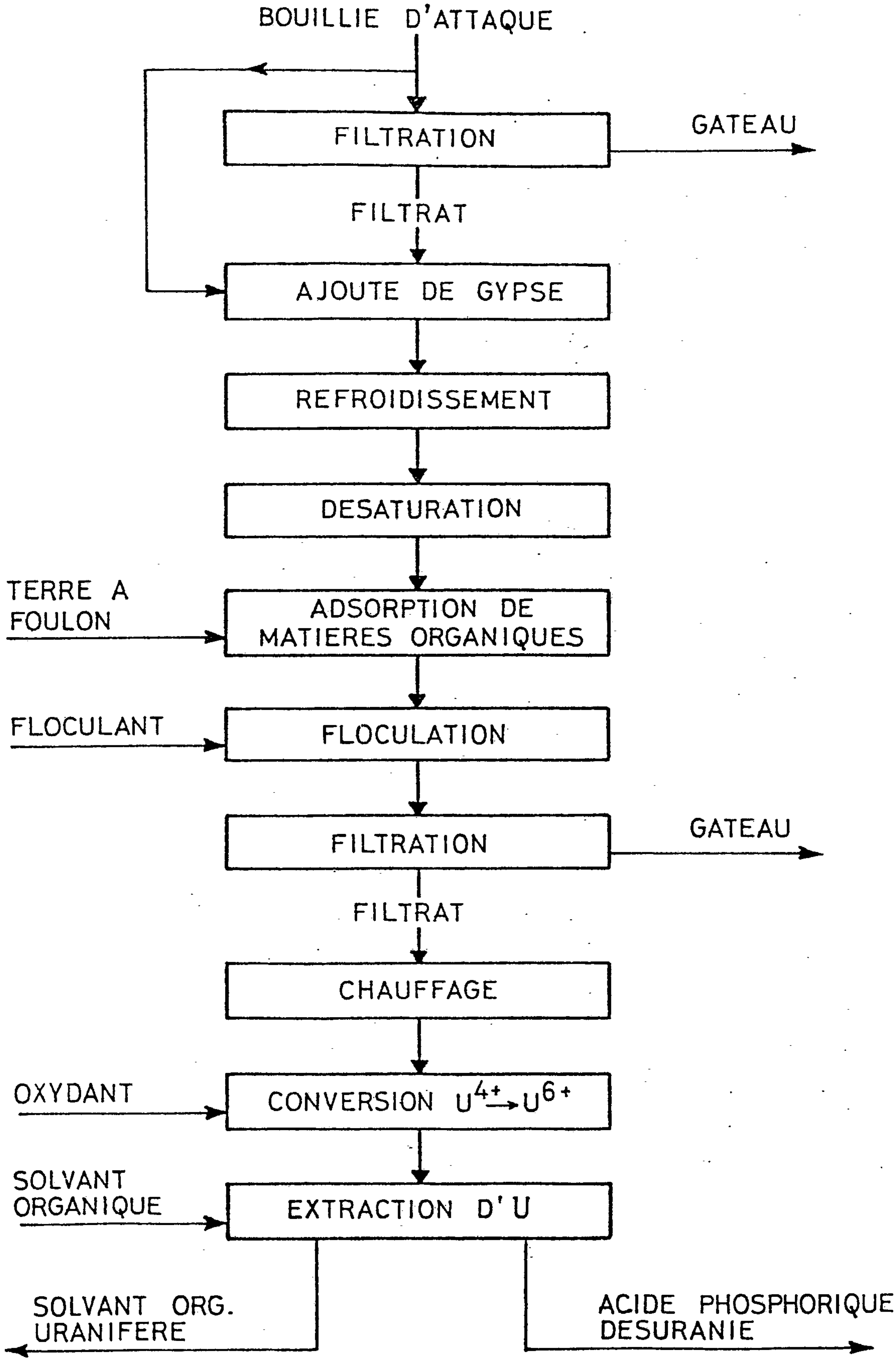

BOUILLIE D'ATTAQUE
FILTRATION
GATEAU
FILTRAT
AJOUTE DE GYPSE
REFROIDISSEMENT
DESATURATION
TERRE A FOULON
ADSORPTION DE MATIERES ORGANIQUES
FLOCULANT
FLOCULATION
FILTRATION
GATEAU
FILTRAT
CHAUFFAGE
OXYDANT
CONVERSION $U^{4+} \rightarrow U^{6+}$
SOLVANT ORGANIQUE
EXTRACTION D'U
SOLVANT ORG. URANIFERE
ACIDE PHOSPHORIQUE DESURANIE